# EUROPÄISCHE PATENTSCHRIFT

(11) **EP 2 142 393 B1**
(45) Veröffentlichungstag und Bekanntmachung des Hinweises auf die Patenterteilung: **16.11.2011**
(21) Anmeldenummer: 08734295.2
(22) Anmeldetag: 27.03.2008
(51) Int. Cl.: B60J 5/10

(54) **GETEILTE FAHRZEUGHECKKLAPPE**
DIVIDED VEHICLE TAILGATE
HAYON DE VEHICULE EN PLUSIEURS PARTIES

(30) Priorität: 03.04.2007 CZ 20070239
(43) Veröffentlichungstag der Anmeldung: 13.01.2010
(73) Patentinhaber: Skoda Auto A.S., 293 60 Mladá Boleslav (CZ)
(72) Erfinder: CIMRMAN, Radek, 294 01 Bakov nad Jizerou (CZ); TOPEK, Miroslav, 530 09 Pardubice (CZ)
(86) Internationale Anmeldenummer: PCT/CZ2008/000036
(87) Internationale Veröffentlichungsnummer: WO 2008/119304

(56) Entgegenhaltungen:
- EP-A- 0 159 017
- DE-A1- 4 400 374
- DE-A1-102006 013 735
- DE-U1- 9 310 058

## Beschreibung

### Technischer Bereich

Die Erfindung bezieht sich auf geteilte Fahrzeugheckklappen, bzw. auf Lichtsignalisierung der Elementumstellzeit, die Öffnung nur von dem Unterteil oder der ganzen Heckklappe sichert..

### Bisheriger Stand der Technik

Aus dem Stand der Technik ist Realisierung der Heckklappe bekannt, die in zwei Teile aufgeteilt ist, d. h., dass man entweder die ganze Heckklappe, wie bei Karossen vom Typ Liftback, oder nur ihren Unterteil, wie bei Karossen vom Typ Sedan öffnen kann.

Eine Reihe von Konstruktionsvarianten einer solchen zweiteiligen Heckklappe ist bekannt. Zu den bekanntesten gehören Fahrzeugsheckklappen, die durch Ober- und Unterteil gebildet sind. Die Heckklappe ist mit einem Schloss oben versehen, das zur Verknüpfung von Ober- und Unterteil und/oder von Oberteil zu Karosserie, und einem Schloss unten, dass zur Verknüpfung von Heckklappe und/oder von Unterteil zu Karosserie dient.

Die Fahrzeugsheckklappe wird durch ein Steuergerät gesteuert, das aufgrund der Signale von Entriegelungs- und Oberteilschalter, welche am Heckklappenunterteil platziert sind, Umstellelemente, Schloss unten und Anziehgriff betätigt. Die Umstellelemente werden in Kofferraum der Karosserie untergebracht und bestehen aus einem Motor, wodurch ein großes Laufzahnrad über einen Übersetzungsmechanismus angetrieben wird, wobei beide Grenzstellungen durch einen Kontrollschalter von Unterteil und Kontrollschalter von Heckklappe signalisiert werden.

Nachteil der bekannten Lösung ist es, dass die Zeit, während der die Elemente umgestellt werden, nicht signalisiert wird. Die Bedienung muss im Falle der Öffnung der ganzen Heckklappe zuerst den Oberteilschalter betätigen, und dann abwarten, bis die Umstellelemente von der einen in die andere Grenzstellung umgestellt werden, wobei sie über Beendigung dieses Prozesses nicht informiert wird.

DE 10 2006 013 735 beschreibt den Oberbegriff des Anspruchs 1.

### Erfindungsbasis

Die vorgelegte Erfindung bietet Art und Weise der Lösung mit Lichtsignalisierung der Zeit für Umstellung der Elemente, die entweder nur Öffnung von Unterteil, oder von ganzer Heckklappe sichern..

Die Phase der Elementumstellung wird durch Licht signalisiert, wobei Dauer dieser Phase von der Elementumstellungszeit von der einen in die zweite Grenzstellung abhängt. Die Lichtsignalisierung wird durch Aufleuchten von Bremslichtern und/oder von 3. Fahrzeugsbremslicht realisiert. Nach Lichtsignalisierung von Umstellphase kann auch Lichtsignalisierung von Phase der Umstellquittierung erfolgen.

### Bildübersicht auf der Zeichnung

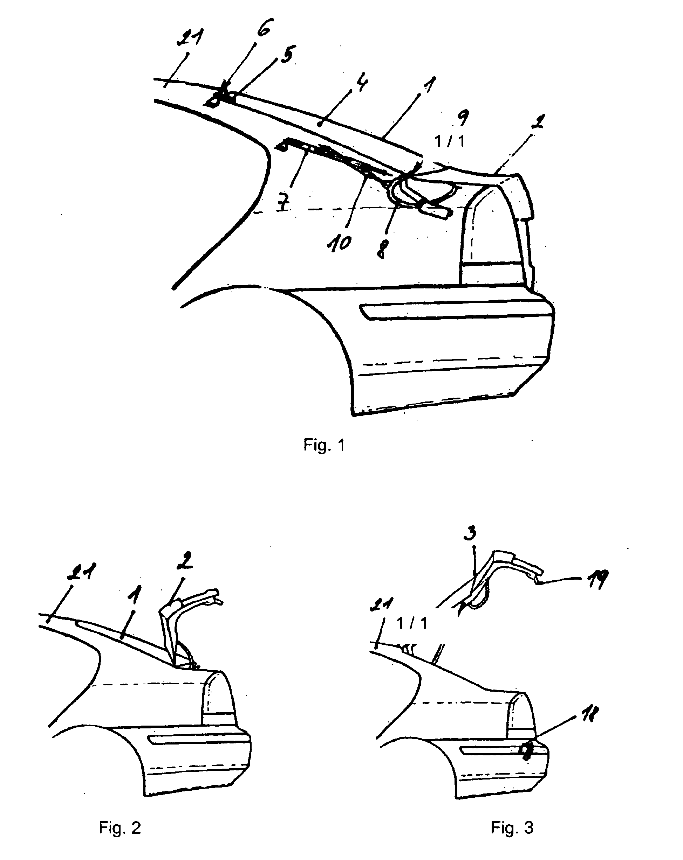

Die Erfindung wird durch Schemazeichnungen näher erklärt, bei denen das Bild Nr. 1. die Heckklappe in geschlossener Position darstellt. Auf dem Bild Nr. 2 gibt es die Heckklappe nur mit geöffnetem Unterteil, auf dem Bild Nr. 3 ist die Heckklappe geöffnet als Ganzheit.

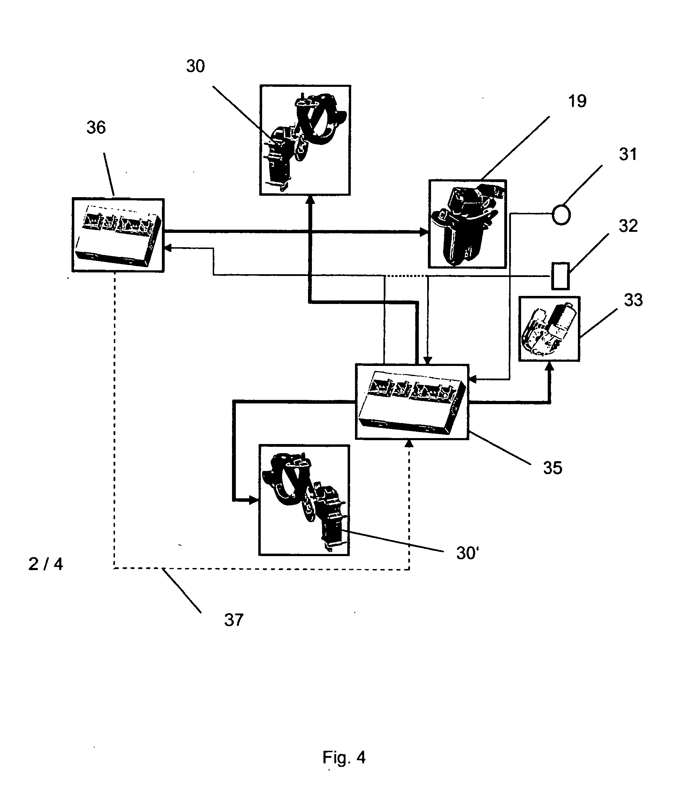

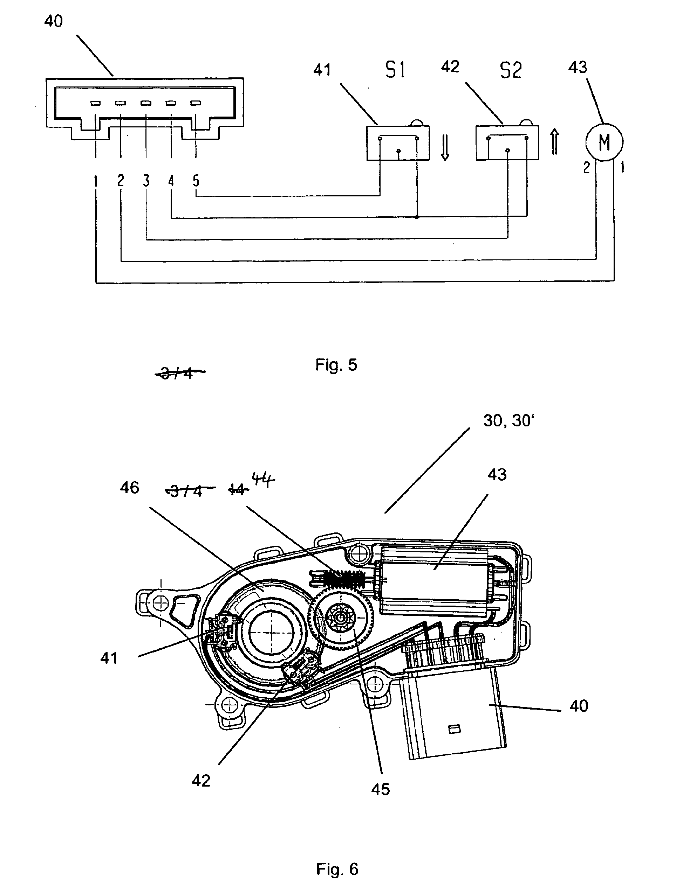

Das Bild Nr. 4 stellt schematische Ansicht der Schaltung von elektrischer Betätigung der geteilten Fahrzeugsheckklappe dar. Das Bild Nr. 5 stellt schematische Ansicht der elektrischen Schaltung von Umstellelement dar. Das Bild Nr. 6 stellt das Umstellelement im Schnitt dar.

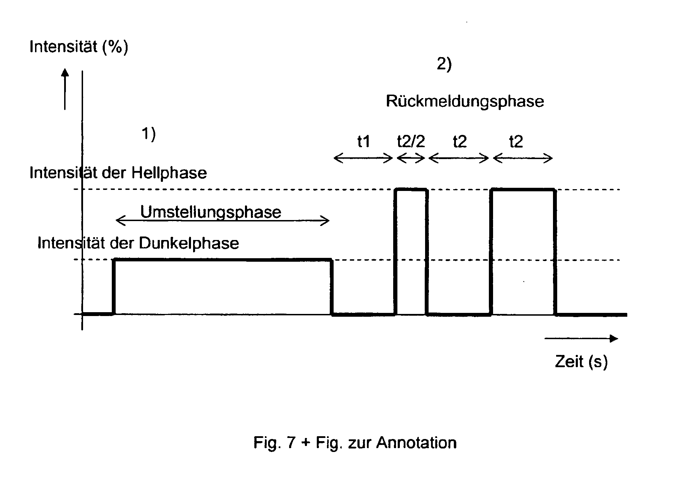

Das Bild Nr. 7 ist ein Diagramm, dass Lichtsignalisierungsverlauf der Umstellelemente mit Hilfe von Bremslichtern, bzw. 3. Bremslicht darstellt.

### Beispiele der Erfindungsdurchführung

Die geteilte Fahrzeugsheckklappe 3 nach Bildern 1 bis 3 beinhaltet Ober- 1 und Unterteil 2. Am Unterteil 2 gibt es am Unterrand ein Schloss unten 19 zur Öse-Aufnahme 18, platziert am Schweller hinten von dem Kofferraum der Karosserie 21. Der Oberteil 1 ist mit Verglasung 4 versehen und ist mit Hilfe des ersten Paars der Einachsgehänge 5 kippbar um die Achse 6 zur Karosserie aufgenommen 21. Zwischen der Karosse 21 und dem Oberteil 1 gibt es ein Paar erster Gasdruckfedern 7. Am Unterrand vom Oberteil 1 ist mit Hilfe des zweiten Paars der Einachsgehänge 8 kippbar um die Achse 9 der Unterteil 2, gelagert. Zwischen dem Ober- 1 und Unterteil 2 gibt es ein Paar zweiter Gasdruckfedern 10. Das dritte Bremslicht befindet sich im Oberteil der Heckklappe 3, überwiegend im Oberteil der Verglasung oder im Karosserie-Spoiler dicht oberhalb des Oberteils 1 so, damit dies für Transportmittel fahrend hinter dem Fahrzeug und in diesem Falle auch für die Fahrzeugsbedienung gut sichtbar wird.

Aus dem Bild Nr. 4 ist Schaltung der elektrischen Betätigung der geteilten Fahrzeugsheckklappe ersichtlich. Der Unterteil 2 der geteilten Heckklappe 3 weist einen Entriegelungsschalter 32, der das Schloss 19 unten betätigt, auf, er sichert Verknüpfung von Unterteil 2 bzw. von Heckklappe 3 und Karosserie 21. In der Grundstellung kann man mit Hilfe des Schalters 32 ausschließlich den Unterteil 2 öffnen, das heißt, dass Oberteil 1 und Karosserie 21 fest verbunden sind. Ferner ist auf dem Unterteil 2 ein Oberteilschalter 31 untergebracht, der zur Betätigung der Umstellelemente 30, 30' dient, die sich im Kofferraum der Karosserie 21 befinden. Bei Bedarf der Öffnung der ganzen Heckklappe 3, ist es zuerst notwendig, den Schalter 31 zu schalten, wodurch es mittels der Umstellelemente 30, 30' zu Verbindung des Ober- 1 und Unterteils 2, und gleichzeitig zu Lösung des Oberteils 1 und der Karosserie 21 kommt, nachfolgend wird der Schalter 32 geschaltet, wodurch das Schloss 19 sich von der Öse 18 löst. Danach ist es möglich mit einem Griff, der meistens durch Versenkung im Unterteil entsteht 2, die Heckklappe 3 zu öffnen. Nach erneuter Heckklappenschließung 3, kommt es erneut zu Umstellung in Grundposition, das heißt, dass man mittels Schalter 32 nur den Unterteil 2 öffnen kann. Im Falle, dass das Fahrzeug geschlossen ist, ist die Betätigung verriegelt und man kann weder den Unterteil 2, noch die Heckklappe 3 öffnen.

Elektrische Betätigung der Heckklappe wird durch ein Steuergerät der Heckklappe 35 gesteuert, das Signale von Entriegelungsschalter 32, Oberteilschalter 31 und Steuergerät der Komfortelektronik 36 empfängt, und in Abhängigkeit von Status dieser Signale steuert sie Umstellelemente 30, 30' und mit Hilfe des Steuergeräts 36 auch das Schloss unten 19.

Bei günstiger Ausführung wird die elektrische Betätigung durch ein einziges Steuergerät gesteuert, dass Signale von Entriegelungsschalter 32 und Oberteilschalter 31 empfängt und in Abhängigkeit von Status dieser Signale steuert sie die Umstellelemente 30, 30' und das Schloss unten 19. Ferner wird durch das Steuergerät bei Hecklappen- 3 oder Unterteilschließung 2 der Anziehgriff gesteuert, der die Schließung erleichtert, und zwar so, dass er dabei hilft, den Widerstand der Dichtung, platziert an der Karosserie entlang der Heckklappe 3, zu überwinden.

Aus den Bildern. 5 und 6 geht hervor, dass die Umstellelemente 30, 30' aus einem Motor 43 mit einem Übersetzungsmechanismus, gebildet durch eine Schnecke 44, platziert am Rotor vom Motor 43, mit kleinem Zahnrad 45 und Laufzahnrad 46 bestehen, wobei beide Grenzstellungen durch den Kontrollschalter des Unterteils 41 und Kontrollschalter der Heckklappe 42 signalisiert werden. Die Umstellelemente 30, 30' befinden sich im Karosseriekofferraum 21 und steuern die Schlösser, mit denen die Heckklappe 3 versehen ist, und welche im Falle der Unterteilöffnung 2 Verknüpfung von Oberteil 1 und Karosserie 21, oder im Falle der Öffnung der ganzen Heckklappe 3 Verknüpfung von Ober- 1 und Unterteil 2 sichert.

Schalter 41 und 42 werden geschaltet und/oder abgeschaltet in Abhängigkeit von Drehung eines Zahnrads 46, gedreht durch den Motor 43, der in Abhängigkeit von dem Signal des Steuergeräts gesteuert wird. Bei Erreichung einer der Grenzstellungen hält der Motor 43 an.

Auf dem Bild Nr. 7 ist ein Diagramm, der Verlauf der Lichtsignalisierung der Umstellelemente mittels Bremslichter, bzw. 3. Bremslicht darstellt.

Phase der Umstellung von Elementen 30, 30' wird mittels Licht signalisiert, wobei Länge dieser Phase von Umstelldauer von Elementen 30, 30' von der einen in die zweite Grenzstellung abhängt. Umstellphase von Elementen 30, 30' wird in geeigneter Ausführung durch Aufleuchten von Bremslichtern und/oder 3. Fahrzeugsbremslicht signalisiert. Intensität der Lichtsignalisierung bewegt sich in Abstand von 0 bis 100 %, wobei es sich um einen Parameter handelt. Nach Umstellphase von Elementen 30, 30' in die Endstellung kann eine Quittierphase der Umstellung folgen, wobei diese aus 1 und mehreren Impulsen bestehen kann. Die Impulslänge, bzw. Länge der einzelnen Impulse bewegt sich in Abstand von Millisekunden bis Sekunden, wobei es sich um einen Parameter handelt und Intensität der Lichtsignalisierung sich in Abstand 0 bis 100 % bewegt, wobei es sich um einen Parameter handelt. Die Bewegungslichtsignalisierung der Umstellelemente 30, 30' wird durch das Steuergerät, platziert im Fahrzeug, das Signale vom Schalter 31 empfängt, gesteuert, und aufgrund seines Zustands betätigt er Umstellelemente 30, 30' und Lichtsignalisierung. Die Parameter der Impulslängen, Anzahl und Intensität der Lichtsignalisierung sind im Steuergerät einstellbar.

### Auflistung der Bezugsmarken

- 1: Oberteil
- 2: Unterteil
- 3: Heckklappe
- 4: Verglasung
- 5: Erstes Einachsgehänge
- 6: Achse von erstem Gehänge
- 7: erste Gasfeder
- 8: zweite Einachsgehänge
- 9: Achse von zweitem Gehänge
- 10: zweite Gasfeder
- 18: Öse
- 19: Schloss unten (Türschloss)
- 21: Karosserie
- 30, 30': Umstellelemente
- 31: Oberteilschalter
- 32: Entriegelungsschalter
- 33: Anziehgriff
- 35: Steuergerät der Heckklappe
- 36: Steuergerät der Komfortelektronik
- 37: Bus
- 40: Stecker
- 41: Kontrollschalter Unterteil
- 42: Kontrollschalter Heckklappe
- 43: Motor
- 44: Schnecke
- 45: kleines Zahnrad
- 46: Abtriebszahnrad

## Patentansprüche

1. Die geteilte Fahrzeugsheckklappe (3), die aus Oberteil (1) und Unterteil (2), und weiter aus Umstellelementen (30, 30') besteht, die Verknüpfung und/oder Lösung von Ober- (1) und Unterteil (2) und/oder Oberteil (1) und Karosserie (21) sichert, **dadurch gekennzeichnet, dass** die Phase der Umstellelemente (30, 30') durch Licht signalisiert wird, wobei Länge dieser Phase von Umstelldauer der Elemente (30,30') von der einen in die zweite Grenzstellung abhängt.

2. Die geteilte Fahrzeugsheckklappe laut Anspruch 1, **dadurch gekennzeichnet, dass** die Phase der Umstellelemente (30, 30') durch Aufleuchten von Bremslichtern und/oder 3. Fahrzeugsbremslicht signalisiert wird.

3. Die geteilte Fahrzeugsheckklappe laut vorigen Ansprüchen, **dadurch gekennzeichnet, dass** Intensität der Lichtsignalisierung sich in Abstand von 0 bis 100% bewegt, wobei es sich um einen Parameter handelt..

4. Die geteilte Fahrzeugsheckklappe laut vorigen Ansprüchen, **dadurch gekennzeichnet, dass** nach Umstellphase der Elemente (30, 30') in die Endstellung kann eine Phase der Umstellquittierung folgen, wobei diese aus 1 und mehreren Impulsen bestehen kann.

5. Die geteilte Fahrzeugsheckklappe laut Anspruch 4, **dadurch gekennzeichnet, dass** Länge von einem Impuls, bzw. einzelnen Impulsen sich in Abstand von Millisekunden bis Sekunden bewegt, wobei es sich um einen Parameter handelt, und Intensität der Lichtsignalisierung sich in Abstand von 0,1 bis 100%, bewegt, wobei es sich um einen Parameter handelt.

6. Die geteilte Fahrzeugsheckklappe laut vorigen Ansprüchen, **dadurch gekennzeichnet, dass** Bewegungslichtsignalisierung der Umstellelemente (30, 30') das Steuergerät, platziert im Fahrzeug, steuert, das Signale von Schalter (31) empfängt und aufgrund des Zustands Umstellelemente (30, 30') und Lichtsignalisierung betätigt.

7. Die geteilte Fahrzeugsheckklappe laut Anspruch 5 und 6, **dadurch gekennzeichnet, dass** Parameter von Impulslängen, Anzahl und Intensität der Lichtsignalisierung im Steuergerät einstellbar sind.

## Claims

1. Divided vehicle tailgate (3) which consists of an upper part (1) and a lower part (2) and furthermore of repositioning elements (30, 30') which ensure the connection and/or release of the upper part (1) and lower part (2) and/or of the upper part (1) and vehicle body (21), **characterized in that** the phase of the repositioning elements (30, 30') is signalled by light, the length of said phase depending on the duration of repositioning the elements (30, 30') from the one boundary position into the second boundary position.

2. Divided vehicle tailgate according to Claim 1, **characterized in that** the phase of the repositioning elements (30, 30') is signalled by illumination of brake lights and/or the third vehicle brake light.

3. Divided vehicle tailgate according to the preceding claims, **characterized in that** the intensity of the light signalling moves within a range of from 0 to 100%, this being a parameter.

4. Divided vehicle tailgate according to the preceding claims, **characterized in that** the phase of repositioning the elements (30, 30') into the end position can be followed by a repositioning acknowledgement phase, with it being possible for the latter to consist of one or more pulses.

5. Divided vehicle tailgate according to Claim 4, **characterized in that** the length of a pulse or of individual pulses moves within a range of milliseconds to seconds, this being a parameter, and the intensity of the light signalling moves within a range of from 0.1 to 100%, this being a parameter.

6. Divided vehicle tailgate according to the preceding claims, **characterized in that** moving light signalling of the repositioning elements (30, 30') is controlled by the control unit, which is placed in the vehicle, receives signals from a switch (31) and, on the basis of the state, actuates repositioning elements (30, 30') and light signalling.

7. Divided vehicle tailgate according to Claims 5 and 6, **characterized in that** parameters of pulse lengths, number and intensity of the light signalling can be set in the control unit.

## Revendications

1. Hayon de véhicule en plusieurs parties (3) composé d'une partie supérieure (1) et d'une partie inférieure (2) ainsi que d'éléments de réglage (30, 30') et sécurisant l'attachement et/ou le détachement de la partie supérieure (1) et de la partie inférieure (2) et/ou de la partie supérieure (1) et de la carrosserie (21), **caractérisé en ce que** la phase des éléments de réglage (30, 30') est signalée par de la lumière, la longueur de cette phase dépendant du temps de réglage des éléments (30, 30') pour passer d'une première position limite dans une deuxième position limite.

2. Hayon de véhicule en plusieurs parties selon la revendication 1, **caractérisé en ce que** la phase des éléments de réglage (30, 30') est signalée par allumage des feux de stop et/ou du feu de frein du véhicule.

3. Hayon de véhicule en plusieurs parties selon les revendications précédentes, **caractérisé en ce que** l'intensité de la signalisation de la lumière se situe dans la plage allant de 0 à 100 %, cet élément constituant un paramètre.

4. Hayon de véhicule en plusieurs parties selon les revendications précédentes, **caractérisé en ce qu'**après la phase de réglage des éléments (30, 30') dans la position finale, une phase de fin de réglage peut se produire, celle-ci se composant d'l ou de plusieurs impulsions.

5. Hayon de véhicule en plusieurs parties selon la revendication 4, **caractérisé en ce que** la longueur d'une impulsion et/ou des impulsions individuelles est de l'ordre des millisecondes aux secondes, cet élément constituant un paramètre et **en ce que** l'intensité de la signalisation de la lumière se situe dans la plage de 0,1 à 100 %, cet élément constituant également un paramètre.

6. Hayon de véhicule en plusieurs parties selon les revendications précédentes, **caractérisé en ce que** la signalisation d'un mouvement de lumière des éléments de réglage (30, 30') commande l'appareil de commande, placé dans le véhicule, qui reçoit les signaux du contacteur (31) et actionne les éléments de réglage (30, 30') et la signalisation de la lumière sur la base de cet état.

7. Hayon de véhicule en plusieurs parties selon la revendication 5 et 6, **caractérisé en ce que** les paramètres constitués par les longueurs d'impulsion, le nombre et l'intensité de la signalisation de la lumière sont réglables dans l'appareil de commande.
